(19) Europäisches Patentamt
European Patent Office
Office européen des brevets

(11) **EP 0 720 018 A1**

(12) **EUROPEAN PATENT APPLICATION**

(43) Date of publication:
**03.07.1996 Bulletin 1996/27**

(51) Int. Cl.⁶: $G01N\ 27/406$

(21) Application number: **95203014.6**

(22) Date of filing: **07.11.1995**

(84) Designated Contracting States:
**DE FR GB IT**

(30) Priority: **27.12.1994 US 363796**

(71) Applicant: **GENERAL MOTORS CORPORATION**
**Detroit Michigan 48202 (US)**

(72) Inventor: **Chen, David Kwo-Shyong**
**Rochester Hills, Michigan 48306 (US)**

(74) Representative: **Denton, Michael John et al**
**Patent Section**
**1st Floor**
**Gideon House**
**28 Chapel Street**
**Luton Bedfordshire LU1 2SE (GB)**

(54) **Thick film heater with multiple inks for the serpentine and the lead**

(57)     The invention includes a combustion engine exhaust sensor having a thick film heater printed on a substrate wherein the thick film heater includes a serpentine printed portion with an ink with higher electrical resistivity and a lead printed with an ink with lower electrical resistivity. The use of multiple inks for the serpentine and the lead in the thick film heater results in an exhaust sensor having higher serpentine temperature, lower connector contact temperature, and lower cost.

EP 0 720 018 A1

## Description

### Field of the Invention

This invention relates to combustion engine exhaust sensors, and more particularly to an exhaust sensor having a thick film heater with multiple inks for the serpentine and the lead.

### Background of the Invention

A thick film heater is a conductor film stripe printed or embedded in a substrate of a combustion engine exhaust sensor. Traditional, the film is printed with an ink which includes primarily platinum and minor amounts other precious metal additives.

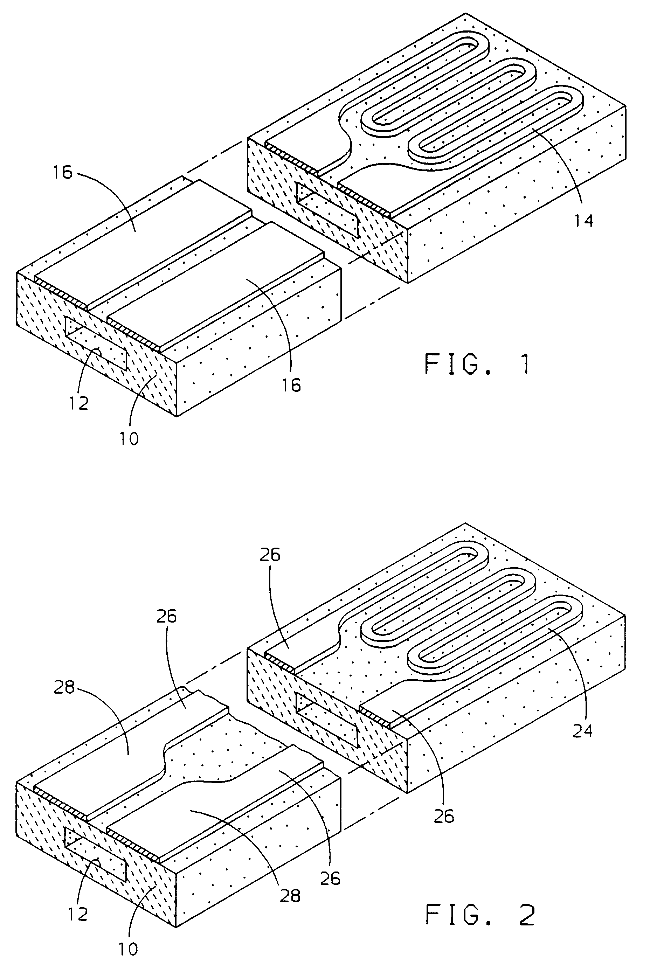

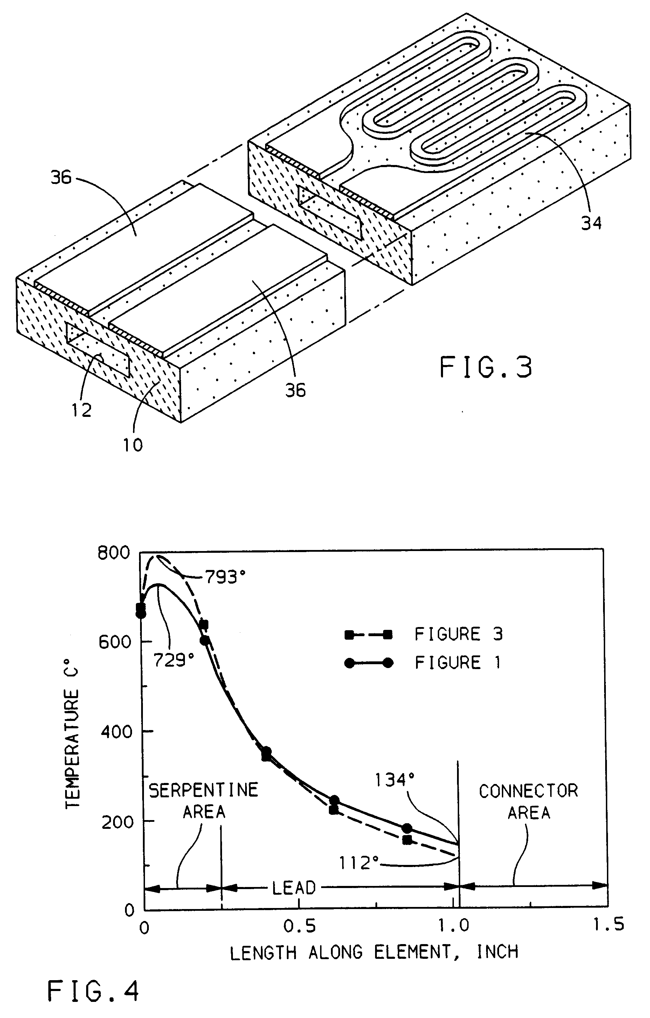

A plate sensor element usually includes a substrate 10, an air reference channel 12 formed in the substrate, a printed thick film heater including a serpentine portion 14 and a lead 16 as shown in Figure 1. The serpentine portion includes substantially parallel legs with smaller width, which has a higher electrical resistance per unit length, than that of the lead. Generally, electrical resistance R of a conductor film material increases with temperature. When an electrical voltage V is applied to the heater, the electrical power P generated in the heater can be expressed as

$$P = \frac{V^2}{R} = I^2 R$$

where R is inversely proportional to the cross-sectional area of the printed ink. Therefore, R increases with a reduction in the width of the ink printed on the substrate. As a result, the majority of the electric heat is generated in the serpentine due to its narrower width and thus higher electrical resistance. In applications, the serpentine is located in the region of the sensor substrate needed to be heated. The main purpose of the lead is conducting the electric current to the serpentine, although some heat is generated in the lead.

One major concern in the thick film heater designs is temperature distribution. The ideal operating temperature of a typical exhaust sensor is roughly between 350 to 850°C. On the other hand, the temperature in the connector contact area should be minimized for the durability of the electrical contact. To achieve the above temperature distribution, the required electrical power and power distribution should be optimized along with the design of the sensor, i.e., size, packaging, and etc.

Another major concern in the heater design is cost. The largest portion in the heater cost is the ink due to its high precious metal content. Therefore, an ideal heater should be made with minimum amount of ink to lower cost.

Designing a thick film heater with one ink material for the serpentine and the lead to provide a desired temperature distribution with low ink amount is difficult. For example, it is desirable to lower the heat generation in the lead by printing the lead with greater width or height (thus lower resistance) to minimize the temperature at the connector end for durability. However, this would increase the amount of the heater ink. In addition, when the element size is very small, the width of the lead is limited by the element size. On the other hand, the amount of the ink can be reduced by printing the lead with less width or height. This approach would raise the resistance in the lead which increases the electrical power generation in the lead and decreases the electrical current flowing through the serpentine portion. Consequently, the connector contact temperature would rise and the temperature in the serpentine area would decrease.

Another invention of mine is disclosed in U.S. Serial No. 08/332,165, entitled "Low Power Consumption Thick Film Heater" filed October 31, 1994.

The present invention overcomes many of the disadvantages of the prior art.

### SUMMARY OF THE INVENTION

The invention includes a combustion engine exhaust sensor having a thick film heater printed on a substrate wherein the thick film heater includes a serpentine portion printed with a first ink with higher electrical resistivity and a lead printed with a second ink with lower electrical resistivity. The use of multiple inks for the serpentine portion and the lead in the thick film heater results in an exhaust sensor having higher serpentine temperature, lower connector contact temperature, and lower cost.

These and other objects, features and advantages will be apparent from the following brief description of the drawings, detailed description and appended claims and drawings.

### Brief Description of the Drawings

Figure 1 illustrates a single ink heating element;
Figure 2 illustrates a multiple ink heating element of an exhaust gas sensor according to the present invention for lower ink amount;
Figure 3 illustrates a multiple ink heating element of an exhaust gas sensor according to the present invention for higher serpentine temperature and lower connector contact temperature; and
Figure 4 compares the temperature distributions of the sensor with the single ink heater (Figure 1) and the sensor with multiple ink heater (Figure 3).

### Detailed Description of a Preferred Embodiment of the Present Invention

A thick film heater according to the present invention is made using a first ink with higher electrical resistivity for the serpentine and a second ink with lower electrical resistivity for the lead. The serpentine is printed with an ink with a resistivity ranging from 600 nohm-m to 2000 nohm-m at room temperature, preferably from 800 to 1600 nohm-m, and most preferably from 900 to 1400 nohm-m. The lead is printed with an ink with a resistivity ranging from 200 to 800 nohm-m, and preferably from 300 to 600 nohm-m, and most preferably from 300 to 500 nohm-m. Suitable ink compositions include noble metal, such as platinum, rhodium, palladium, silver, alumina, silica, cordierite, and binder.

In another invention of mine, disclosed in U.S. Serial No. 08/332,165 filed October 31, 1994 (Figure 1), the serpentine 14 and the lead 16 are printed with one ink, designated as ink A. Figure 2 illustrates a heating element for combustion exhaust sensor according to the present invention which use much less ink than a single ink heating element design. The serpentine portions of both heaters 14 and 24 are the same. In the present invention (Figures 2-3), the serpentine 24 is printed with ink A and the lead 26 and electrical contact pad 28 are printed with another ink, designated as ink B. The width of the lead 26 of the present invention is one third of the width of the lead 16 of Figure 1. The electrical resistivity of ink A is three times of the electrical resistivity of ink B. Therefore, the resistances of the leads of the two heater designs are the same and the electrical and thermal performances are identical. The big saving comes from the amount of ink used in the heater lead of this invention. In Figure 1, about 80% of the ink is used to print the lead 16. The lead 26 in Figure 2 saves two thirds of the 80% of the total ink in the design of Figure 1. This is more than 50% saving in the total ink used in the serpentine and the lead.

Figure 3 illustrates a heating element for combustion exhaust sensor according to the present invention which provides higher serpentine temperature and lower connector contact temperature than the prior art heating element. The serpentine 34 and the lead 36 patterns of this art are identical to those of Figure 1. However, the ink used for the lead 36 is different from that of the lead 16 of Figure 1. In the present invention, the serpentine portion 34 is printed with ink A and the lead 36 is printed with ink B. Therefore, the electrical resistance of the lead 36 in Figure 3 is lower. This effect reduces the electric power generated in the lead while increases the current flowing through the serpentine. The results are a higher serpentine temperature and a lower connector contact temperature. Figure 4 illustrates the comparison of the temperatures of the sensor element according to the present invention and my other invention (Figure 1).

For Figures 1-4, ink A had a composition of, by weight, 69% platinum, 10% alumina and the balance being an organic binder; and ink B had a composition of, by weight, about 75% platinum and the balance an organic binder. According to the present invention, the serpentine heater portion may be ink A having a composition of, by weight, about 50-75% noble metal which may be at least one of platinum, palladium, rhodium, and silver, 5-25%, for example 6, 8, 10, 12, 15, 20%, of an insulator such as at least one of alumina, silica, cordierite and inorganic oxides, and the balance being an organic binder; and the lead portion may be ink B having a composition of, by weight, 70-85% metal such as at least one of platinum, palladium, rhodium and silver, 0-5%, 0-4%, 0-1% of an oxide which may be at least one of alumina, silica and cordierite, and the balance being an organic binder.

**Claims**

The embodiments of the invention in which an exclusive property or privilege is claimed are defined as follows:

1. A product comprising:
   a thick film heater for a combustion engine exhaust sensor having a substrate and a heating element form on a face of the substrate, said heating element prepared from a first ink having a composition comprising, by weight, 50-75% of at least one selected from the group consisting of platinum, palladium, rhodium, and silver, 5-25% of an insulator being at least one selected from the group consisting of alumina, silica, cordierite and inorganic oxides; and a second ink comprising, by weight, 70-85% of at least one selected from the group consisting of platinum, palladium, rhodium and silver, and 0-5% of at least one selected from the group consisting of alumina, silica and cordierite, and wherein ink A is deposited on the substrate in a serpentine shape and ink B is deposited on the substrate in the shape of leads connecting to the serpentine shape.

2. A product as set forth in claim 1 wherein said insulator is at least one selected from the group consisting of alumina and cordierite.

3. A method of making a heater for a combustion engine exhaust sensor comprising:
   depositing a first ink in a serpentine shape on a face of a substrate;
   depositing a second ink in the shape of leads connecting to the serpentine shape, said first ink comprising, by weight, 50-75% of at least one selected from the group consisting of platinum, palladium, rhodium, and silver, 5-25% of at least one selected from the group consisting of alumina, silica, cordierite and inorganic oxides; and second ink comprising, by weight, 70-85% of at least one selected from the group consisting of platinum, palladium, rhodium and silver, and 0-5% of at least one selected from the group consisting of alumina, silica and cordierite.

4. A method as set forth in claim 3 wherein said insulator is at least one selected from the group consisting of alumina and cordierite.

FIG. 1

FIG. 2

FIG.3

FIG.4

**European Patent Office**

# EUROPEAN SEARCH REPORT

Application Number

EP 95 20 3014

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | DE-A-39 07 312 (NGK INSULATORS)<br>* column 5, line 25 - column 6, line 31 *<br>* column 8, line 65 - column 9, line 45 *<br>--- | 1-4 | G01N27/406 |
| Y | EP-A-0 167 297 (NGK INSULATORS)<br>* page 8, line 9 - page 9, line 5 *<br>--- | 1-4 | |
| Y | DE-A-40 06 085 (R. BOSCH)<br>* abstract *<br>--- | 1-4 | |
| A | EP-A-0 064 666 (NISSAN MOTOR)<br>* page 7, line 19 - page 11, line 8 *<br>--- | 1-4 | |
| A | DE-A-38 02 051 (NGK INSULATOS)<br>* column 10, line 46 - column 11, line 4 *<br>--- | 1-4 | |
| A | EP-A-0 343 533 (GTE LABORATORIES)<br>* column 6, line 43 - column 7, line 22 *<br>----- | 1-4 | |
| | | | TECHNICAL FIELDS SEARCHED (Int.Cl.6) |
| | | | G01N |

The present search report has been drawn up for all claims

| Place of search | Date of completion of the search | Examiner |
|---|---|---|
| THE HAGUE | 24 January 1996 | CALLEWAERT, H |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)